# EUROPÄISCHE PATENTSCHRIFT

(11) **EP 2 185 341 B1**
(45) Veröffentlichungstag und Bekanntmachung des Hinweises auf die Patenterteilung: **15.07.2015**
(21) Anmeldenummer: 08785415.4
(22) Anmeldetag: 01.08.2008
(51) Int. Cl.: B29C 65/14, B29C 65/16, B42D 25/00, G06K 19/077

(54) **VERFAHREN ZUM VERBINDEN VON DOKUMENTMATERIALIEN UNTERSCHIEDLICHEN TYPS IN EINEM MEHRSCHICHTSICHERHEITSDOKUMENTKÖRPER**
METHOD FOR CONNECTING DIFFERENT TYPES OF MATERIALS IN A MULTI-LAYER SECURITY DOCUMENT BODY
PROCÉDÉ D'ASSEMBLAGE DE TYPES DE MATÉRIAUX DIFFÉRENTS DANS UN CORPS DE DOCUMENT DE SÉCURITÉ MULTICOUCHE

(30) Priorität: 02.08.2007 DE 102007036838
(43) Veröffentlichungstag der Anmeldung: 19.05.2010
(73) Patentinhaber: Bundesdruckerei GmbH, 10969 Berlin (DE)
(72) Erfinder: MERX, Matthias, 14532 Kleinmachnow (DE)
(74) Vertreter: Patentanwälte Bressel und Partner mbB
(86) Internationale Anmeldenummer: PCT/EP2008/006509
(87) Internationale Veröffentlichungsnummer: WO 2009/015909

(56) Entgegenhaltungen:
- EP-A- 1 297 944
- WO-A-2005/028209
- DE-A1- 10 338 732
- FR-A- 2 843 559
- JP-A- 2005 290 372
- US-A- 5 882 463

## Beschreibung

Die Erfindung betrifft ein Verfahren zum Verbinden von einer ersten Schicht eines ersten Kunststoffmaterials mit einer zweiten Schicht eines anderen Kunststoffmaterials eines Mehrschichtsicherheitsdokumentkörpers, die flächig übereinander geschichtet werden, so dass die erste Schicht und die zweite Schicht in einem flächigen Überlappungsbereich eine Grenzfläche aufweisen, wobei das erste Kunststoffmaterial und das andere Kunststoffmaterial unterschiedliche Schmelztemperaturen aufweisen und die Schichten durch Energieeintrag miteinander verbunden werden. Die Erfindung betrifft ferner einen solchen Mehrschichtsicherheitsdokumentkörper sowie eine Vorrichtung zum Herstellen eines solchen Mehrschichtsicherheitsdokumentkörpers.

Mehrschichtsicherheitsdokumente, die einen aus mehreren Schichten aufgebauten Dokumentkörper umfassen, werden heutzutage als Identifikationsdokumente, wie beispielsweise in Pässen, in buchartigen Personalausweisen, als Führerscheine, vorläufige Personaldokumente, Sicherheitsdokumente, Zugangsberechtigungen oder dergleichen, verwendet. Zur Herstellung eines Mehrschichtsicherheitsdokumentkörpers werden mehrere Schichten aus Kunststoffmaterialien übereinander geschichtet und in einem Laminationsprozess miteinander zu einem Mehrschichtsicherheitsdokumentkörper verbunden. Zumindest einige der Schichten sind heutzutage in der Regel aus einem Polycarbonat (PC) hergestellt. Zur Personalisierung eines Mehrschichtsicherheitsdokumentkörpers, der Polycarbonatschichten umfasst, kann Laserstrahlung verwendet werden, die in unterschiedlichen Ebenen und/oder Schichten des laminierten Körpers Schwärzungen hervorrufen kann, mit denen beispielsweise Buchstaben, Zahlen aber auch Grafiken darstellbar sind. In Mehrschichtsicherheitsdokumentkörpern können eine Vielzahl weiterer Sicherheitsmerkmale eingearbeitet werden, beispielsweise Hologramme eingeklebt und/oder einlaminiert werden, Mikrochips eingeklebt und/oder einlaminiert werden, Sicherheitsfäden eingearbeitet werden usw. Alle diese Merkmale, einschließlich einer Laserpersonalisierung, werden verwendet, um ein Fälschen eines Sicherheitsdokuments und/oder ein Reproduzieren des Sicherheitsdokuments zu erschweren und/oder unmöglich zu machen.

Mehrschichtsicherheitsdokumentkörper werden auch in passartige Sicherheitsdokumente eingearbeitet, die ein oder mehrere Papierseiten in Form eines Buchs oder Büchleins umfassen, um auf diesen Sichtvermerke, Visa usw. anbringen zu können. Mehrschichtsicherheitsdokumentkörper, die ausschließlich aus PC-Schichten hergestellt sind, eignen sich nicht, um diese in ein Passbuch, in dem die einzelnen Seiten buchbinderisch vernäht sind, einzuarbeiten. Daher ist es üblich, in den Mehrschichtsicherheitsdokumentkörper mindestens eine Schicht einzuarbeiten, die aus einem anderen Kunststoffmaterial besteht, welches sich zum Einbinden in ein Passbuch eignet und ein problemloses Umblättern des Mehrschichtsicherheitsdokumentkörpers in dem Passbuch ermöglicht. Eine solche Kunststoffschicht besteht vorzugsweise aus einem thermoplastischen Elastomer, bevorzugt aus einem thermoplastischen Polyurethan (TPU).

Aus dem Stand der Technik ist aus der EP 1 502 765 A1 beispielsweise ein Büchlein mit einem personalisierten Datenblatt bekannt. Das Büchlein weist zwischen einem Umschlag mehrere Blätter auf und jedes Blatt besitzt eine Vorderseite und eine Rückseite. Es ist wenigstens eine Datenseite vorgesehen, die fest mit dem Umschlag verbunden ist. Die Datenseite weist eine flexible Schicht auf und diese flexible Schicht ragt mit einem Bereich aus einem Datenträger heraus. In diesem Bereich ist die Datenseite mit dem Umschlag und den übrigen Blättern verbunden. Die flexible Schicht ist mit wenigstens einer weiteren Schicht flächig verbunden, beispielsweise durch Verschweißen oder Verkleben, und damit ohne mechanisches Verbindungsteil unlösbar eingebunden.

Aus der FR 2 843 559 A1 ist eine mehrlagige personalisierte Identifkationskarte bekannt, die einen Kartenkörper aufweist, der an einer Oberseite Personalisierungsinformationen aufweist, die von Außen sichtbar sind. Auf der Oberseite des Kartenkörpers ist ein zumindest teilweise transparenter Film befestigt. Der Film weist Abgrenzungslinien auf, die Zonen in dem Film eingrenzen, die eine verringerte oder gesteigerte mechanische Widerstandsfähigkeit aufweisen. Ferner ist ein Verfahren zur Herstellung einer solchen Identifikationskarte beschrieben.

Aus der DE 103 38 732 A1 ist ein kartenförmiger Mehrschichtverbund bekannt. Die Schichten eines mehrschichtigen kartenförmigen Datenträgers werden im Laserdurchstrahlungsverfahren miteinander verbunden, insbesondere verschweißt. Gleichzeitig können Funktionselemente im Laserdurchstrahlverfahren im Kartenkörper fixiert und Strukturen mittels Laser in oder auf einzelnen Schichten des Schichtverbunds erzeugt werden.

Aus der DE 103 42 946 A1 ist ein Einlageblatt für ein buchartiges Identifikationsdokument, ein Identifikationsdokument und ein Verfahren zur Herstellung eines buchartigen Identifikationsdokuments bekannt, wobei das Einlageblatt mit einer Naht in einem Scharnierbereich entlang einer Seite mit den übrigen Buchteilen verbindbar ist. Das Einlageblatt besteht aus mindestens einer Schicht aus einem thermoplastischen Elastomer und mindestens einer weiteren Schicht. Die mindestens eine weitere Schicht erstreckt sich in Richtung der Einlageblattebene im Wesentlichen von der der Naht gegenüberliegenden Seite bis zu dem Scharnierbereich und die mindestens eine Schicht aus dem thermoplastischen Elastomer erstreckt sich in den Scharnierbereich hinein. Die Schichten, die das Einlageblatt bilden, sind miteinander laminiert. Als bevorzugtes thermoplastisches Elastomer wird thermoplastisches Polyurethan (TPU) vorgeschlagen. Für die mindestens eine weitere Schicht werden hochtemperaturstabile Kunststoffe, beispielsweise Polycarbonate (PC), vorgeschlagen. Die Personalisierung des Einlageblattes, welches ein Mehrschichtsicherheitsdokumentkörper ist, erfolgt in den höhertemperaturstabilen Kunststoffen.

Erfahrungen aus der Praxis mit solchen Passbüchern haben jedoch gezeigt, dass sich bei einem Einlageblatt aus einem thermoplastischen Elastomer und einer hierauf laminierten mindestens einer weiteren Schicht aus einem hochtemperaturstabilen Kunststoff wie Polycarbonat (PC), die mit der Personalisierung versehene PC-Schicht von der aus dem thermoplastischen Elastomer gebildeten Schicht bei einer geschickten Wahl von Temperatur und Zugkräften wieder ablösen lässt. Hierbei lässt sich in manchen Fällen die personalisierte PC-Schicht fasst unbeschädigt von der aus dem thermoplastischen Elastomer gebildeten Schicht lösen. Dieses ist im Hinblick auf eine Fälschungssicherheit des Passbuches sehr nachteilig.

Eine Ursache dafür, dass sich die mindestens eine aus einem thermoplastischen Elastomer bestehende Schicht und die mindestens eine weitere Schicht nachträglich wieder voneinander lösen lassen, liegt darin, dass die beiden Materialien unterschiedliche Schmelztemperaturen aufweisen. Bei einem Laminationsprozess ist es daher häufig nicht möglich, eine Temperatur zu wählen, bei der beide Materialien an der Grenzfläche aufschmelzen und sich so miteinander verbinden, dass eine nicht zerstörungsfrei lösbare Verbindung ausgebildet wird. Unter einer nicht zerstörungsfrei lösbaren Verbindung wird im Folgenden eine Verbindung von zwei Schichten verstanden, die nicht wieder auflösbar ist, ohne das insbesondere an der mit einer höheren Schmelztemperatur versehenen Schicht eine Beschädigung entsteht. Soll beispielsweise Polycarbonat (PC) auf das thermoplastische Elastomer, thermoplastisches Polyurethan (TPU) laminiert werden, so schmilzt bei einer zu geringen Temperatur das Polycarbonat (PC) nicht. Wird hingegen eine zu hohe Temperatur gewählt, wo besteht die Gefahr, dass das thermoplastische Polyurethan (TPU) vollständig aufschmilzt, welches nachteilig für dessen Formstabilität ist. Daher sind Laminate zwischen thermoplastischen Elastomeren und hochtemperaturstabilen Thermoplasten bei normalen Laminationsprozessen nicht von ausreichender Güte, um eine nicht zerstörungsfrei lösbare Verbindung in jedem Fall zu gewährleisten, wie die Praxis gezeigt hat.

Der Erfindung liegt somit die technische Aufgabe zugrunde, einen Mehrschichtsicherheitsdokumentenkörper sowie ein Verfahren zur Herstellung eines solchen sowie eine Vorrichtung zum Herstellen eines solchen Mehrschichtsicherheitsdokuments zu schaffen, bei denen oder mit denen eine Verbindung zwischen einer ersten Schicht eines ersten Kunststoffmaterials mit einer Schicht eines anderen Kunststoffmaterials, die flächig übereinander geschichtet sind, ausgebildet ist/wird oder ausbildbar ist, die nicht zerstörungsfrei lösbar ist, wobei das erste Kunststoffmaterial und das andere Kunststoffmaterial unterschiedliche Schmelztemperaturen aufweisen.

Die Aufgabe wird erfindungsgemäß durch ein Verfahren mit den Merkmalen des Patentanspruchs 1 durch einen Mehrschichtsicherheitsdokumentkörper mit den Merkmalen des Patentanspruchs 9 gelöst. Vorteilhafte Ausgestaltungen der Erfindung ergeben sich aus den Unteransprüchen.

Hierfür ist vorgesehen, eine erste Schicht eines ersten Kunststoffmaterials mit einer zweiten Schicht eines anderen Kunststoffmaterials eines Mehrschichtdokumentenkörpers flächig übereinander zu schichten, so dass die erste Schicht und die zweite Schicht in einem flächigen Überlappungsbereich eine Grenzfläche aufweisen, wobei das erste Kunststoffmaterial und das andere Kunststoffmaterial unterschiedliche Schmelztemperaturen aufweisen, und die Schichten durch Energieeintrag miteinander verbunden werden. Erfindungsgemäß ist vorgesehen, in einem Teilbereich des Überlappungsbereichs, vorzugsweise punktuell, an der Grenzfläche Energie einzubringen, so dass die erste Schicht und die zweite Schicht jeweils nur lokal an der Grenzfläche über die jeweilige Schmelztemperatur erwärmt werden und miteinander verbunden werden, so dass eine nicht zerstörungsfrei lösbare Verbindung ausgebildet wird. Die Energie wird hierbei so an der Grenzfläche eingebracht, dass die erste Schicht und die zweite Schicht nicht vollständig entlang einer Schichtdicke, die parallel zu einer Schichtungsrichtung und senkrecht zur Grenzfläche verläuft, aufschmelzen. Kunststoffmaterialien unterschiedlicher Schmelztemperatur, die beide oberhalb ihrer Schmelztemperatur erwärmt und miteinander in Kontakt sind, bilden eine Verbindung, die nicht zerstörungsfrei lösbar ist. Es wird somit ein Mehrschichtsicherheitsdokumentkörper geschaffen, der eine erste Schicht eines ersten Kunststoffmaterials und eine zweite Schicht eines anderen Kunststoffmaterials umfasst, die flächig übereinander geschichtet sind, so dass die erste Schicht und die zweite Schicht in einem flächigen Überlappungsbereich eine Grenzfläche aufweisen, wobei das erste Kunststoffmaterial und das andere Kunststoffmaterial unterschiedliche Schmelztemperaturen aufweisen und die Schichten durch Energieeintrag miteinander verbunden sind. Erfindungsgemäß ist bei dem Mehrschichtsicherheitsdokumentkörper vorgesehen, dass die erste Schicht und die zweite Schicht in einem Teilgebiet des flächigen Übenappungsbereichs an der Grenzfläche lokal eine nicht zerstörungsfrei lösbare Verbindung aufweisen, die durch nur lokales Erwärmen der ersten Schicht und der zweiten Schicht in dem Teilbereich des Überlappungsbereichs an der Grenzfläche über die jeweilige Schmelztemperatur ausgebildet ist. Ein solcher Mehrschichtsicherheitsdokumentenkörper kann mit einer Vorrichtung hergestellt werden, bei der eine Energiequelle relativ zu der Grenzfläche des ersten Kunststoffmaterials und des zweiten Kunststoffmaterials angeordnet ist, die ausgebildet ist, Energie in einem Teilbereich des Überlappungsbereichs der ersten Schicht und der zweiten Schicht an der Grenzschicht einzutragen, so dass das erste Kunststoffmaterial und das andere Kunststoffmaterial nur lokal in dem Teilbereich oder einer begrenzten Umgebung des Teilbereichs an der Grenzfläche jeweils über die Schmelztemperatur erwärmt werden.

Eine besonders gute, d.h. eine besonders stabile, Verbindung der ersten Schicht mit der zweiten Schicht bildet sich aus, wenn eine senkrecht zur Grenzfläche wirkende Druckkraft ausgeübt wird.

Einen besonders vorteilhaften Mehrschichtsicherheitsdokumentkörper erhält man, wenn man die erste und/oder die zweite Schicht mit weiteren Schichten mittels eines über einen weiteren Überlappungsbereich der Schichten im Wesentlichen gleichmäßig verteilt eingebrachten Wärmeeintrag zu einem Verbundkörper laminiert. Ein Verbundkörper, bei dem die erste und die zweite Schicht mit weiteren Schichten zu einem Verbundkörper laminiert sind, ist die erste Schicht vorzugsweise als eine innere, besonders bevorzugt als eine mittlere Schicht ausgebildet. Besonders bevorzugt ist eine Ausführungsform, bei der die erste Schicht an einer Kante des Mehrschichtsicherheitsdokumentkörpers aus dem Verbundkörper übersteht, vorzugsweise entlang einer gesamten Länge der Kante.

Der aus dem Verbundkörper vorstehende Bereich der ersten Schicht, ein so genannter Überstand, ist bei einer bevorzugten Weiterbildung mit einem Umschlag und vorzugsweise mehreren Papierseiten buchbinderisch verbunden, insbesondere vernäht. So erhält man ein Passbüchlein mit einem Mehrschichtsicherheitsdokumentkörper, welches problemlos umgeschlagen werden kann, wenn als erstes Kunststoffmaterial ein thermoplastisches Elastomer, beispielsweise ein thermoplastisches Polyurethanmaterial, gewählt wird.

Der Energieeintrag an der Grenzfläche wird bevorzugt mittels elektromagnetischer Strahlung vorgenommen. Elektromagnetische Strahlung weist den Vorteil auf, dass sie räumlich gut fokussiert werden kann, so dass ein Energieeintrag gezielt an der Grenzfläche erfolgen kann.

Bei einer besonders bevorzugten Ausführungsform wird der Energieeintrag mittels eines fokussierten Laserstrahls vorgenommen. Die Wellenlänge des Lasers wird angepasst an das erste und das zweite Kunststoffmaterial gewählt.

Ebenso kann elektromagnetische Strahlung auch hinsichtlich ihrer zeitlichen Dauer präzise gesteuert werden. Die eingebrachte Energiemenge kann somit gut dosiert werden.

Bei einer bevorzugten Ausführungsform der Erfindung ist vorgesehen, dass die durch das lokale Schmelzen des ersten Kunststoffmaterials der ersten Schicht und des anderen Kunststoffmaterials der zweiten Schicht an der Grenzfläche für einen Betrachter des Mehrschichtsicherheitsdokumentkörpers nicht ohne weiteres optisch wahrnehmbar sein soll. Insbesondere sollen weder an der ersten Schicht noch an der zweiten Schicht optisch oder auch taktil wahrnehmbare Veränderungen hervorgerufen werden. Insbesondere soll bei einer Verwendung eines laserpersonalisierbaren Kunststoffmaterials für die andere Schicht eine Färbungs- oder Schwärzungsreaktion unterbleiben. Auch in möglicherweise vorhandenen weiteren mit der ersten und der zweiten Schicht zu einem Verbundkörper laminierten Schichten soll eine solche Veränderung unterbleiben. Daher ist bei einer bevorzugten Ausführungsform vorgesehen, dass die elektromagnetische Strahlung moduliert wird, um einen effizienten Energieeintrag in die erste und die zweite Schicht zu erreichen. Hierdurch kann erreicht werden, dass sowohl in der ersten Schicht als auch in der zweiten Schicht Energie absorbiert wird, die zu einer Erwärmung des ersten Kunststoffmaterials bzw. des anderen Kunststoffmaterials führt. Wird die Modulation, die eine Frequenzmodulation und/oder eine Amplitudenmodulation sein kann, geschickt gewählt, so kann sichergestellt werden, dass eine Einfärbung oder Schwärzung der laserpersonalisierbaren Schichten des Mehrschichtsicherheitsverbunddokuments unterbleiben. Insbesondere durch eine starke Fokussierung wird dieser Effekt unterstützt. Nur im Fokus an der Grenzfläche treten hohe Energiedichten auf.

Als erstes Kunststoffmaterial wird vorzugsweise ein thermoplastisches Elastomer, besonders bevorzugt thermoplastisches Polyurethan (TPU), verwendet. Das andere Kunststoffmaterial ist vorzugsweise ein Kunststoffmaterial mit hoher Erweichungstemperatur, d.h. ein hochtemperaturstabiles Kunststoffmaterial, bevorzugt ein Polycarbonat (PC). Neben einem vorzugsweise verwendeten thermoplastischen Polyurethan (TPU) als erstes Kunststoffmaterial für die erste Schicht können auch weitere thermoplastische Elastomere eingesetzt werden. Hierfür stehen die gesamte Gruppe der thermoplastischen Polyurethane, die Gruppe der thermoplastischen Copolyester und die Gruppe der thermoplastischen Polyether-Block-Amide zur Verfügung. Für die zweite Schicht wird als anderes Kunststoffmaterial vorzugsweise ein hochtemperaturstabiler Kunststoff, d.h. ein Kunststoff mit hoher Erweichungstemperatur, gewählt. Diese umfassen neben dem bevorzugten Kunststoffmaterial Polycarbonat (PC) Polyethersulfon (PES), Polyetheretherketon (PEEK), Polyphenylenoxid (PPO), Polyphenylensulfid (PPS), Polyethylenterephthalat (PET), Polybutylenterephthalat (PBT), Polyoxymethylen (POM), Polysulfon (PSU), Polyethermid (PEI) oder Polyamid (PA). Die gegebenenfalls weiteren Schichten bestehen vorzugsweise aus einem dieser hochtemperaturstabilen Kunststoffe oder einer Kombination hieraus.

Als weiteres Sicherheitsmerkmal werden in Mehrschichtsicherheitsdokumentkörper häufig Mikrochips integriert, die besonders bevorzugt für ein berührungsloses Auslesen verborgen im Innern eines Mehrschichtsicherheitsdokumentkörpers angeordnet sind. Hierzu wird ein Mikrochip mit einer Antenne gekoppelt, die dann beide bevorzugt in eine der Schichten des Mehrschichtsicherheitsdokumentkörpers eingearbeitet sind. Besonders bevorzugt wird der Mikrochip mit der verbundenen Antenne in die erste Schicht, die aus einem thermoplastischen Elastomermaterial gebildet ist, eingearbeitet. Insbesondere bei einer Verwendung einer solchen mit einem so genannten Inlay, bestehend aus dem Mikrochip und der Antenne, versehenen Schicht, ist eine Anwendung der Erfindung besonders vorteilhaft. Wird beispielsweise das besonders bevorzugte thermoplastische Polyurethanmaterial für die erste Schicht verwendet und für die zweite Schicht und mögliche weitere Schichten ein Polycarbonatmaterial verwendet, so besteht die Gefahr, dass beim Laminieren eine zu hohe Temperatur gewählt wird, um eine nicht lösbare Verbindung zwischen der ersten Schicht und der zweiten Schicht durch einen flächigen Energieeintrag in Form von Wärmeenergie zu erreichen. Wird nämlich eine Temperatur gewählt, die ausreichend ist, das thermoplastische Polyurethanmaterial aufzuschmelzen, so besteht die Gefahr, dass sich die Antenne und der Mikrochip aus ihrer gewünschten Position bewegen. Bei Verwendung des erfindungsgemäßen Verfahrens zum Herstellen eines erfindungsgemäßen Mehrschichtsicherheitsdokumentkörpers, bei dem in die erste Schicht ein Chip mit einer Antenne eingearbeitet ist, besteht die Gefahr des Aufschmelzens der gesamten ersten Schicht gerade nicht. Dadurch, dass der Energieeintrag nur lokal an der Grenzschicht zwischen der ersten Schicht und der zweiten Schicht erfolgt, kann erreicht werden, dass nach dem Erreichen der Schmelztemperatur des ersten und des zweiten Kunststoffmaterials bzw. einem Einbringen der hierfür erforderlichen Energie der Energieeintrag gestoppt wird. Die an der Verbindungsstelle vorhandene Energie kann in die übrigen Bereiche der ersten und der zweiten Schicht dissipieren, so dass eine rasche Abkühlung an der Grenzschicht auftritt und die nicht zerstörungsfrei lösbare Verbindung ausgebildet wird. Die an der Grenzschicht zugeführte Energiemenge wird so gewählt, dass sie nicht ausreicht, um außerhalb des lokal über den Energieeintrag erwärmten Teilbereichs der Grenzfläche oder einer begrenzten Umgebung des Teilbereichs ein Aufschmelzen der ersten oder der zweiten Schicht zu bewirken.

Um jedoch eine gute Verbindung der ersten Schicht mit der zweiten Schicht zu erreichen, ist bei einer bevorzugten Ausführungsform vorgesehen, dass Energie gezielt an mehreren voneinander beabstandeten Teilbereichen des Überlappungsbereichs an der Grenzfläche eingetragen wird, um mehrere nicht zerstörungsfrei lösbare Verbindungen auszubilden. Hierbei kann der Energieeintrag zeitgleich an mehreren Teilbereichen oder zeitversetzt erfolgen. Insgesamt ist darauf zu achten, dass die Teilbereiche soweit voneinander entfernt sind bzw. der Energieeintrag zeitlich so erfolgt, dass die Energie in den Mehrschichtsicherheitsverbunddokumentkörper so dissipieren kann, dass ein Aufschmelzen außerhalb der Teilbereiche, in die gezielt Energie an der Grenzschicht eingebracht wird, oder außerhalb begrenzter Umgebungen der Teilbereiche ausgeschlossen ist. Gegebenenfalls kann eine Kühlung an einer Ober und/oder Unterseite des erzeugten Mehrschichtsicherheitsdokumentkörpers vorgesehen sein.

Besonders hervorgehoben werden soll an dieser Stelle, dass eine Verbindung der ersten Schicht mit der zweiten Schicht in erfindungsgemäßer Weise vor einem Laminieren mit möglichen weiteren Schichten zu einem Mehrschichtsicherheitsdokumentkörper oder nach dem Laminieren erfolgen kann. Ebenso können die nicht zerstörungsfrei lösbaren Verbindungen vor oder nach einem Personalisieren der laserpersonalisierbaren Schichten erfolgen.

Für die Herstellung eines Mehrschichtsicherheitsdokumentkörpers wird eine Vorrichtung vorgeschlagen, bei der eine Energiequelle relativ zu der Grenzfläche des ersten Kunststoffmaterials und des zweiten Kunststoffmaterials angeordnet ist, die ausgebildet ist, Energie in einen Teilbereich des Überlappungsbereichs der ersten Schicht und der zweiten Schicht an der Grenzschicht einzutragen, so dass das erste Kunststoffmaterial und das andere Kunststoffmaterial nur lokal in dem Teilbereich oder einer begrenzten Umgebung des Teilbereichs an der Grenzfläche jeweils über die Schmelztemperatur erwärmt werden.

Bei einer bevorzugten Ausführungsform einer solchen Herstellungsvorrichtung ist die Energiequelle eine elektromagnetische Strahlungsquelle.

Um die elektromagnetische Strahlung an der Grenzfläche einbringen zu können, ist bei einer bevorzugten Ausführungsform vorgesehen, dass eine Fokussierungseinrichtung die elektromagnetische Strahlung an der Grenzfläche in dem Teilbereich fokussiert.

Bei einer bevorzugten Ausführungsform der Herstellungsvorrichtung ist die Energiequelle ein Laser.

Um einen guten Energieeintrag in das erste Kunststoffmaterial und das zweite Kunststoffmaterial an der Grenzfläche realisieren zu können, ist bei einer bevorzugten Ausführungsform eine Modulationsvorrichtung vorgesehen, die die elektromagnetische Strahlung moduliert. Als Modulationsvorrichtung kann jede geeignete Vorrichtung verwendet werden, die in der Lage ist, eine Wellenlänge der elektromagnetischen Strahlung und/oder eine Amplitude der elektromagnetischen Strahlung zu modulieren. Bei einigen Ausführungsformen kann vorgesehen sein, dass die Modulationsvorrichtung in die Energiequelle integriert ist. Dies gilt beispielsweise für eine als Diodenlaser ausgebildete Energiequelle, bei der eine Frequenz- und Amplitudenmodulation bereits in der Energiequelle ausführbar ist. Auch bei anderen Lasersystemen kann der Modulator in die als Lasersystem ausgebildete Energiequelle integriert sein.

Um an mehreren Stellen in dem Überlappungsbereich voneinander beabstandete nicht zerstörungsfrei lösbare Verbindungen auszubilden, ist bei einer Ausführungsform der Erfindung vorgesehen, dass die elektromagnetische Strahlung innerhalb der Grenzfläche an unterschiedliche Positionen lenkbar ist. Dies lässt sich beispielsweise über eine geeignete, beispielsweise verschiebbare, Optik erreichen.

Bei einer weiteren Ausführungsform ist vorgesehen, dass die elektromagnetische Strahlung über eine Abbildungsoptik zeitgleich in mehrere voneinander beabstandete Teilbereiche der Grenzfläche gelenkt wird. Bei einer solchen Ausführungsform können mehrere nicht zerstörungsfrei lösbare Verbindungen zeitgleich ausgebildet werden.

Ebenso ist eine Ausführungsform denkbar, bei der eine Abbildungsoptik vorgesehen ist, die zum einen die elektromagnetische Strahlung zeitgleich in unterschiedliche Teilbereiche der Grenzfläche lenkt und ferner so ausgebildet ist, dass Auftreffbereiche der elektromagnetischen Strahlung in der Grenzschicht verschoben werden können. Hierdurch wird es möglich, nacheinander jeweils mehrere nicht zerstörungsfrei lösbare Verbindungen zwischen der ersten Schicht und der zweiten Schicht auszubilden.

Nachfolgend wird die Erfindung anhand eines bevorzugten Ausführungsbeispiels näher erläutert. Hierbei zeigen:
- Fig. 1: eine schematische Darstellung einer Vorrichtung zum Herstellen eines Mehrschichtsicherheitsdokumentkörpers und einen Mehrschichtsicherheitsdokumentkörper, und
- Fig. 2: ein Passbuch mit einem Mehrschichtsicherheitsdokumentkörper.

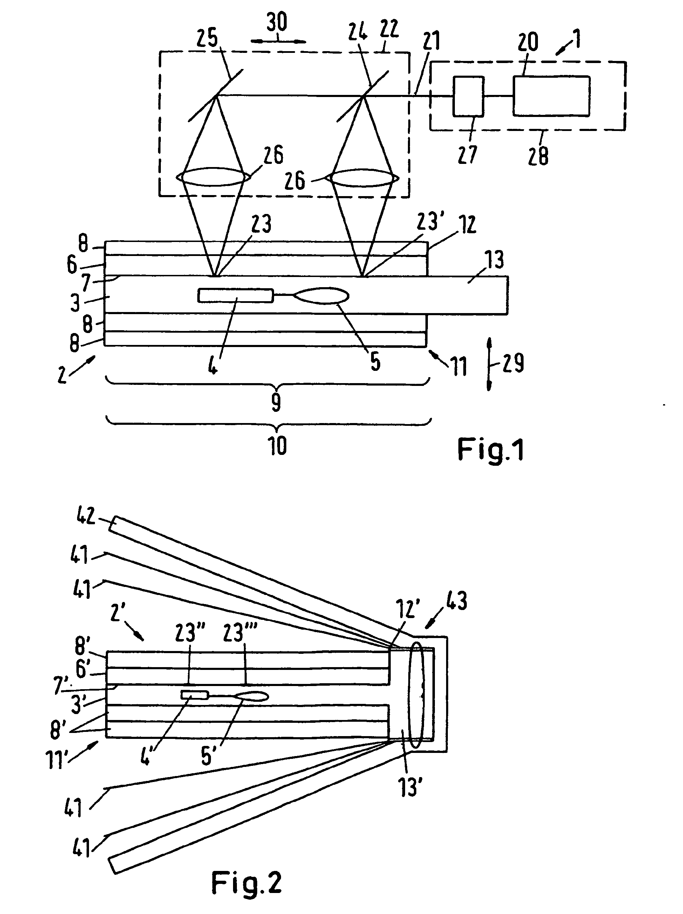

In Fig. 1 ist eine Vorrichtung 1 zum Herstellen eines Mehrschichtsicherheitsdokumentkörpers 2 mit dem Mehrschichtsicherheitsdokumentkörper 2 schematisch dargestellt. Der Mehrschichtsicherheitsdokumentkörper 2 umfasst eine erste Schicht 3, die aus einem ersten Kunststoffmaterial besteht. Das erste Kunststoffmaterial ist vorzugsweise ein thermoplastisches Elastomer, besonders bevorzugt ein thermoplastisches Polyurethan (TPU). In die erste Schicht 3 sind ein Mikrochip 4 und eine hiermit verbundene Antenne 5 eingearbeitet, die ein berührungsloses Auslesen von in dem Mikrochip 4 gespeicherten Daten bzw. ein Übertragen von Daten in den Mikrochip gestatten. Der Mikrochip 4 und die Antenne 5 sind in die erste Schicht 3 so eingearbeitet, dass sie vollständig von dem Kunststoffmaterial der ersten Schicht umschlossen sind und so innerhalb der ersten Schicht 3 fixiert sind.

Über die erste Schicht 3 ist eine zweite Schicht 6 geschichtet, so dass diese flächig aneinander angrenzen. Die erste Schicht 3 und die zweite Schicht 6 weisen in einem flächigen Überlappungsbereich eine Grenzfläche 7 auf. Bei der Darstellung nach Fig. 1 erstrecken sich sowohl die erste Schicht 3 als auch die zweite Schicht 6 sowie die Grenzfläche 7 jeweils auch senkrecht zur Zeichenebene. Die erste Schicht 3 und die zweite Schicht 6 sind vorzugsweise mit weiteren Schichten 8 übereinander geschichtet. Die Schichtung erfolgt vorzugsweise so, dass die erste Schicht 3 eine innere Schicht, bevorzugt eine mittlere Schicht, ist. Ein flächiger Überlappungsbereich der ersten Schicht 3 und der zweiten Schicht 6, welcher durch die geschweifte Klammer 9 angedeutet ist, erstreckt sich vorzugsweise nicht über die gesamte Fläche der ersten Schicht 3. Ein weiterer Überlappungsbereich, der durch eine weitere geschweifte Klammer 10 angedeutet ist, der weiteren Schichten 8 ist vorzugsweise identisch mit dem Überlappungsbereich der ersten Schicht 3 mit der zweiten Schicht 6 oder überdeckt die Fläche der ersten Schicht 3 vorzugsweise zumindest nicht vollständig. Der weitere Überlappungsbereich überdeckt vorzugsweise die gesamte zweite Schicht 6. Der weitere Überlappungsbereich kann über Kanten der ersten Schicht 3 hinausragen, vorzugsweise dann im Wesentlichen an drei Kanten.

Die erste Schicht 3, die zweite Schicht 6 und die weiteren Schichten 8 werden vorzugsweise durch ein flächiges Einbringen von Wärmeenergie zu einem Verbundkörper laminiert. Hierbei bildet sich, wie oben bereits erläutert, zwischen der ersten Schicht 3, die vorzugsweise aus einem thermoplastischen Elastomer, vorzugsweise einem thermoplastischen Polyurethanmaterial, besteht, und der zweiten Schicht 6, die vorzugsweise wie die weiteren Schichten 8 aus einem hochtemperaturstabilen Kunststoffmaterial, bevorzugt einem Polycarbonatmaterial, besteht, eine Verbindung aus, die unter geeigneten Bedingungen zerstörungsfrei für die zweite Schicht 6 gelöst werden kann. Der bei der Lamination erstellte Verbundkörper 11 ist vorzugsweise so ausgebildet, dass die erste Schicht 3 entlang einer Kante 12, bevorzugt entlang im Wesentlichen der gesamten Kantenlänge (ausgenommen bleiben gegebenenfalls Abschnitte der Kante 12, in den die übrigen Schichten 8 parallel zur Kantenrichtung über die erste Schicht 3 hinausragen, wie dieses beispielsweise der Fall ist, wenn die übrigen Schichten 8 und zweite Schicht 6 an den restlichen drei Kanten des Verbundkörpers 11 über die erste Schicht 3 überstehen, um die erste Schicht 3 zu umschließen), des Mehrschichtsicherheitsdokumentkörpers 2 aus dem Verbundkörper 11 mit einem Überstand 13 übersteht. Dieser Überstand 13 kann verwendet werden, um den Mehrschichtsicherheitsdokumentkörper 2 später in ein Passbuch, beispielsweise mittels eines Einnähens, einbinden zu können.

Um eine nicht zerstörungsfrei lösbare Verbindung zwischen der ersten Schicht 3 und der zweiten Schicht 6 ausbilden zu können, weist die Vorrichtung 1 eine Energiequelle 20 auf. Die Energiequelle 20 ist vorzugsweise als Laser ausgebildet. Die von der Energiequelle emittierte elektromagnetische Strahlung 21 wird über ein optisches System 22 auf einen oder, wie hier dargestellt, bevorzugt auf mehrere Teilbereiche 23, 23' der Grenzfläche 7 zwischen der ersten Schicht 3 und der zweiten Schicht 6 fokussiert. Hierfür kann das optische System 22 beispielsweise einen halb durchlässigen Spiegel 24 und einen weiteren Spiegel 25 sowie Fokussierungslinsen 26 umfassen. Es versteht sich für den Fachmann, dass das optische System hier nur schematisch dargestellt ist und eine Vielzahl von optischen Komponenten umfassen kann. Für die Fokussierung der elektromagnetischen Strahlung 21 auf die Teilbereiche 23, 23', die voneinander in der Grenzfläche 7 beabstandet sind, ist insbesondere eine Fokussierung der elektromagnetischen Strahlung senkrecht zur Grenzfläche 7 von entscheidender Bedeutung, um den Energieeintrag in die erste Schicht 3 und die zweite Schicht 6 möglichst nahe an der Grenzfläche 7 zu erreichen. Um einen Energieeintrag in das Kunststoffmaterial der ersten Schicht 3 und das andere Kunststoffmaterial der zweiten Schicht 6 effizient zu gestalten, kann es vorteilhaft sein, die elektromagnetische Strahlung zu modulieren. Hierfür ist ein Modulator 27 vorgesehen. Wie durch einen gestrichelten Kasten 28 angedeutet ist, kann der Modulator in die Energiequelle 20 integriert sein.

Eine Modulation der elektromagnetischen Strahlung 21 erfolgt so, dass ein effizienter Energieeintrag an der Grenzfläche in das erste Kunststoffmaterial und das andere Kunststoffmaterial erfolgt. Hierbei wird die Modulation so gewählt, dass eine Färbung oder Schwärzung, insbesondere in der zweiten Schicht 6 oder einer der weiteren Schichten 8, unterbleibt. Bei der Modulation kann es sich um eine Amplitudenmodulation und/oder eine Frequenzmodulation handeln.

Der Energieeintrag erfolgt so, dass das erste Kunststoffmaterial und das andere Kunststoffmaterial nur in den Teilbereichen 23, 23' an der Grenzfläche 7 oder begrenzten Umgebungen aufschmelzen. Reicht die eingebrachte Energie aus um dieses zu erreichen, so wird der Energieeintrag beendet. Es ergibt sich für den Fachmann, dass die Teilbereiche, in die die Energie eingebracht wird, nicht identisch mit den Bereichen sein müssen, in denen das erste Kunststoffmaterial und das andere Kunststoffmaterial schmelzen. Vielmehr können aufgrund einer Dissipation der Energie das erste Kunststoffmaterial und das andere Kunststoffmaterial auch in begrenzten Umgebungen der Teilbereiche aufschmelzen und an der Ausbildung der nicht lösbaren Verbindung beteiligt sein.

Als besonders vorteilhaft hat es sich herausgestellt, Druckkräfte senkrecht zu der Grenzfläche 7 anzuwenden, so dass sich in den Teilbereichen 23, 23' das aufgeschmolzene erste Kunststoffmaterial der ersten Schicht 3 gut mit dem aufgeschmolzenen anderen Kunststoffmaterial der zweiten Schicht 6 verbindet, um nicht zerstörungsfrei lösbare Verbindungen auszubilden.

Bei der dargestellten Ausführungsform ist das optische System 22 relativ zu dem Mehrschichtsicherheitsdokumentkörper in der Weise beweglich angeordnet (wie mittels eines Doppelpfeils 30 angedeutet ist), dass Fokussierungsgebiete der elektromagnetischen Strahlung, die in den Teilbereichen 23, 23' liegen, in der Grenzfläche 7 verschoben werden können. Hierdurch können nacheinander eine Vielzahl von nicht zerstörungsfrei lösbaren Verbindungen zwischen der ersten Schicht 3 und der zweiten Schicht 6 ausgebildet werden. Diese können sowohl in regelmäßigen Abständen als auch in unregelmäßigen Abständen ausgebildet werden. Besonders bevorzugt ist ein Ausbilden dieser nicht zerstörungsfrei lösbaren Verbindungen in Bereichen, an denen in darüber bzw. darunter liegenden Schichten, bezogen auf eine Schichtungsrichtung 29, andere Sicherheitsmerkmale (nicht dargestellt) angeordnet sind, die beim Versuch, die Verbindung der ersten Schicht 3 von der zweiten Schicht 6 zu lösen, zerstört werden.

In Fig. 2 ist eine weitere Ausführungsform eines Mehrschichtsicherheitsdokumentkörpers 2' dargestellt. Eine als mittlere Schicht ausgebildete erste Schicht 3' weist einen T-förmigen Querschnitt auf. Die zweite Schicht 6' sowie weitere Schichten 8' überlappen die erste Schicht 3' nur im Bereich des längeren Schenkels des T-förmigen Querschnitts. Der restliche Bereich der ersten Schicht 3' bildet einen Überstand 13', der mit Papierseiten 41 und einem Buchdeckel 42 zu einem Passbuch 43 gebunden ist. Um zu verhindern, dass die zweite Schicht 6' und die übrigen Schichten 8', die zu einem Verbundkörper 11' in einem Laminationsverfahren mit der ersten Schicht 3' verbunden sind, von der ersten Schicht 3' zerstörungsfrei gelöst werden können, sind zwischen der ersten Schicht 3', die vorzugsweise aus einem thermoplastischen Polyurethanmaterial gebildet ist, und der zweiten Schicht 6', die vorzugsweise aus einem Polycarbonat wie die weiteren Schichten 8' gebildet ist, in mehreren voneinander beabstandeten Teilbereichen an einer Grenzfläche 7' zwischen der ersten Schicht 3' und der zweiten Schicht 6' nicht zerstörungsfrei lösbare Verbindungen ausgebildet, die durch ein lokales Aufschmelzen der ersten Schicht 3' und der zweiten Schicht 6' aufgrund eines lokalisierten Energieeintrags in die Teilbereiche 23" und 23"' der Grenzfläche 7' bewirkt sind.

Wie bei dem Beispiel nach Fig. 1 sind auch bei dem Mehrschichtsicherheitsdokumentkörper 11' in die erste Schicht 3' ein Mikrochip 4' und eine Antenne 5' als Inlay eingearbeitet.

Es ergibt sich für den Fachmann, dass die beschriebenen Ausführungsformen der Erfindung lediglich beispielhafter Natur sind. Insbesondere kann die Erfindung auf Sicherheitsdokumentkörper angewendet werden, die selbst vollständige Sicherheitsdokumente darstellen, d.h., nicht in ein Buch eingebunden werden. Bei solchen Ausführungsformen ist häufig die erste Schicht vollständig von der zweiten Schicht und gegebenenfalls den weiteren Schichten überdeckt, so dass kein Überstand der ersten Schicht existiert.

### Bezugszeichenliste

- 1: Vorrichtung zum Herstellen eines Mehrschichtsicherheitsdokumentkörpers
- 2, 2': Mehrschichtsicherheitsdokumentkörper
- 3, 3': erste Schicht
- 4, 4': Mikrochip
- 5, 5': Antenne
- 6, 6': zweite Schicht
- 7, 7': Grenzfläche
- 8, 8': weitere Schichten
- 9: geschweifte Klammer (Überlappungsbereich der ersten Schicht mit der zweiten Schicht)
- 10: weitere geschweifte Klammer (weiterer Überlappungsbereich der weiteren Schichten 8)
- 11, 11': Verbundkörper
- 12: Kante
- 13, 13': Überstand
- 20: Energiequelle
- 21: elektromagnetische Strahlung
- 22: optisches System
- 23, 23', 23", 23''': Teilbereiche
- 24: halb durchlässiger Spiegel
- 25: weiterer Spiegel
- 26: Fokussierungslinsen
- 27: Modulator
- 28: gestrichelter Kasten
- 29: Schichtungsrichtung
- 30: Doppelpfeil
- 41: Papierseiten
- 42: Buchdeckel
- 43: Passbuch

## Patentansprüche

1. Verfahren zum Verbinden von einer ersten Schicht (3; 3') eines ersten Kunststoffmaterials mit einer zweiten Schicht (6; 6') eines anderen Kunststoffmaterials eines Mehrschichtsicherheitsdokumentkörpers (2; 2'), die flächig übereinander geschichtet werden, sodass die erste Schicht (3; 3') und die zweite Schicht (6; 6') in einem flächigen Überlappungsbereich eine Grenzfläche (7; 7') aufweisen, wobei das erste Kunststoffmaterial und das andere Kunststoffmaterial unterschiedliche Schmelztemperaturen aufweisen, und die Schichten durch Energieeintrag miteinander verbunden werden,
wobei
die Energie gezielt in einen Teilbereich (23, 23'; 23", 23") des flächigen Überlappungsbereichs an der Grenzfläche (7; 7') eingebracht wird, so dass die erste Schicht (3; 3') und die zweite Schicht (6; 6') jeweils nur lokal in dem Teilbereich (23, 23'; 23", 23") oder begrenzt in einer Umgebung des Teilbereichs (23, 23'; 23", 23") des Überlappungsbereichs an der Grenzfläche (7; 7') über die jeweilige Schmelztemperatur erwärmt werden und miteinander verbunden werden, dass in dem Teilbereich (23, 23'; 23", 23") oder der begrenzten Umgebung des Teilbereichs (23, 23'; 23", 23") eine nicht zerstörungsfrei lösbare Verbindung ausgebildet wird.

2. Verfahren nach Anspruch 1, **dadurch gekennzeichnet, dass** eine senkrecht zur Grenzfläche (7; 7') wirkende Druckkraft ausgeübt wird.

3. Verfahren nach Anspruch 1 oder 2, **dadurch gekennzeichnet, dass** die erste Schicht (3; 3') und/oder die zweite Schicht (6; 6') mit weiteren Schichten (8, 8') mittels eines über einen weiteren Überlappungsbereich der Schichten im Wesentlichen gleichmäßig verteilt eingebrachten Wärmeeintrag zu einem Verbundkörper (11, 11') laminiert werden oder sind.

4. Verfahren nach einem der Ansprüche 1 bis 3, **dadurch gekennzeichnet, dass** der Energieeintrag an der Grenzfläche (7; 7') mittels elektromagnetischer Strahlung vorgenommen wird.

5. Verfahren nach einem der Ansprüche 1 bis 4, **dadurch gekennzeichnet, dass** die elektromagnetische Strahlung moduliert wird, um einen effizienten Energieeintrag in die erste Schicht (3; 3') und in die zweite Schicht (6; 6') zu erreichen.

6. Verfahren nach einem der Ansprüche 1 bis 5, **dadurch gekennzeichnet, dass** gezielt in mehreren voneinander beabstandeten Teilbereichen (23, 23'; 23", 23") des Überlappungsbereichs an der Grenzfläche (7; 7') Energie eingetragen wird, um in diesen Teilbereichen (23, 23'; 23", 23") an der Grenzfläche (7; 7') nicht zerstörungsfrei lösbare Verbindungen auszubilden.

7. Verfahren nach einem der Ansprüche 1 bis 6, **dadurch gekennzeichnet, dass** das erste Kunststoffmaterial ein thermoplastisches Elastomer, vorzugsweise ein thermoplastisches Polyurethan (TPU), und das andere Kunststoffmaterial ein hochtemperaturstabiles thermoplastisches Kunststoffmaterial, vorzugsweise ein Polycarbonat (PC), ist.

8. Verfahren nach einem der Ansprüche 1 bis 7, **dadurch gekennzeichnet, dass** in die erste Schicht (3; 3') ein Mikrochip (4; 4') und eine Antenne (5; 5') eingearbeitet werden oder sind.

9. Mehrschichtsicherheitsdokumentkörper (2; 2') umfassend eine erste Schicht (3; 3') eines ersten Kunststoffmaterials und eine zweite Schicht (6; 6') eines anderen Kunststoffmaterials, die flächig übereinander geschichtet sind, sodass die erste Schicht (3; 3') und die zweite Schicht (6; 6') in einem flächigen Überlappungsbereich eine Grenzfläche (7; 7') aufweisen, wobei das erste Kunststoffmaterial und das andere Kunststoffmaterial unterschiedliche Schmelztemperaturen aufweisen und die Schichten durch Energieeintrag miteinander verbunden worden sind,
wobei
die erste Schicht (3; 3') und die zweite Schicht (6; 6') in einem Teilbereich (23, 23'; 23", 23") des flächigen Überlappungsbereichs an der Grenzfläche (7; 7') lokal eine nicht zerstörungsfrei lösbare Verbindung aufweisen, die durch ein nur lokales Erwärmen der ersten Schicht (3; 3') und der zweiten Schicht (6; 6') in dem Teilbereich (23, 23'; 23", 23") des Überlappungsbereichs an der Grenzfläche (7; 7') über die jeweilige Schmelztemperatur ausgebildet ist.

10. Mehrschichtsicherheitsdokumentkörper (2; 2') nach Anspruch 9, **dadurch gekennzeichnet, dass** die erste Schicht (3; 3') und/oder die zweite Schicht (6; 6') mit weiteren Schichten mittels eines über einen weiteren Überlappungsbereich der Schichten im Wesentlichen gleichmäßig verteilt eingebrachten Wärmeeintrag zu einem Verbundkörper laminiert sind.

11. Mehrschichtsicherheitsdokumentkörper (2; 2') nach Anspruch 9 oder 10, **dadurch gekennzeichnet, dass** die nicht zerstörungsfrei lösbare Verbindung unter Ausübung eine senkrecht zur Grenzfläche (7; 7') wirkende Druckkraft im Zeitpunkt des lokalen Erwärmens über den Schmelzpunkt der ersten Schicht (3; 3') und der zweiten Schicht (6; 6') an der Grenzfläche (7; 7') ausgebildet ist.

12. Mehrschichtsicherheitsdokumentkörper (2; 2') nach einem der Ansprüche 9 bis 11, **dadurch gekennzeichnet, dass** die erste Schicht (3; 3') an einer Kante (12; 12') des Mehrschichtsicherheitsdokumentkörpers (2; 2') aus dem Verbundkörper übersteht, vorzugsweise entlang einer gesamten Länge der Kante (12; 12').

13. Mehrschichtsicherheitsdokumentkörper (2; 2') nach Anspruch 9 oder 12, **dadurch gekennzeichnet, dass** zwischen der ersten Schicht (3; 3') und der zweiten Schicht (6; 6') in mehreren voneinander beabstandeten Teilbereichen (23, 23'; 23", 23") des Überlappungsbereichs an der Grenzfläche (7; 7') nicht zerstörungsfrei lösbare Verbindungen ausgebildet sind.

14. Mehrschichtsicherheitsdokumentkörper (2; 2') nach einem der Ansprüche 9 bis 13, **dadurch gekennzeichnet, dass** das erste Kunststoffmaterial ein thermoplastisches Elastomer, vorzugsweise ein thermoplastisches Polyurethan (TPU), und das andere Kunststoffmaterial ein hochtemperaturstabiles thermoplastisches Kunststoffmaterial, vorzugsweise ein Polycarbonat (PC), ist.

15. Mehrschichtsicherheitsdokumentkörper (2; 2') nach einem der Ansprüche 9 bis 14, **dadurch gekennzeichnet, dass** in mindestens eine der Schichten mindestens ein Sicherheitsmerkmal eingearbeitet ist, wobei das mindestens eine Sicherheitsmerkmal in einer Projektion senkrecht auf die Grenzfläche (7; 7') mit der nicht zerstörungsfrei lösbaren Verbindung überlappt.

## Claims

1. A method for connecting a first layer (3; 3') of a first plastic material with a second layer (6; 6') of another plastic material of a multi-layer security document body (2; 2') which are stacked flat on top of each other such that the first layer (3; 3') and the second layer (6; 6') comprise a boundary surface (7; 7') in a flat overlap region, with the first plastic material and the other plastic material having different fusion temperatures and the layers being connected to one another by the introduction of energy,
wherein
the energy is selectively introduced into a partial region (23, 23'; 23", 23") of the flat overlap region at the boundary surface (7; 7') such that the first layer (3; 3') and the second layer (6; 6') are each heated above their respective fusion temperatures and connected to one another only locally in the partial region (23, 23'; 23", 23") or in a limited surrounding area of the partial region (23, 23'; 23", 23") of the overlap region at the boundary surface (7; 7'), so creating in the partial region (23, 23'; 23", 23") or the limited surrounding area of the partial region (23, 23'; 23", 23") a connection which cannot be detached without being destroyed.

2. The method of claim 1 wherein a pressing force acting perpendicularly to the boundary surface (7; 7") is applied.

3. The method of claim 1 or 2 wherein the first layer (3; 3') and/or the second layer (6; 6') are laminated with further layers (8, 8') to form a composite body (11,11') by way of an input of heat introduced via a further overlap region of the layers in an essentially evenly distributed manner.

4. The method of any one of claims 1 to 3 wherein the energy input is effected at the boundary surface (7; 7') by way of electromagnetic radiation.

5. The method of any one of claims 1 to 4 wherein the electromagnetic radiation is modulated to achieve an efficient energy input into the first layer (3; 3') and into the second layer (6; 6').

6. The method of any one of claims 1 to 5 wherein energy is selectively introduced in a plurality of separate partial regions (23, 23'; 23", 23") of the overlap region at the boundary surface (7; 7') so as to create, in these partial regions (23, 23'; 23", 23") at the boundary surface (7; 7'), connections which cannot be detached without being destroyed.

7. The method of any one of claims 1 to 6 wherein the first plastic material is a thermoplastic elastomer, preferably a thermoplastic polyurethane (TPU), and the other plastic material is a thermoplastic material that is stable at high temperature, preferably a polycarbonate (PC).

8. The method of any one of claims 1 to 7 wherein a microchip (4; 4') and an antenna (5; 5') are incorporated into the first layer (3; 3').

9. A multi-layer security document body (2; 2') comprising a first layer (3; 3') of a first plastic material and a second layer (6; 6') of another plastic material, which are stacked flat on top of each other such that the first layer (3; 3') and the second layer (6; 6') comprise a boundary surface (7; 7') in a flat overlap region; the first plastic material and the other plastic material have different fusion temperatures and the layers have been connected to one another by energy input,
wherein
the first layer (3; 3') and the second layer (6; 6') comprise locally in a partial region (23, 23'; 23", 23") of the flat overlap region at the boundary surface (7; 7') a connection which cannot be detached without being destroyed and which is configured by only a local heating-up above their respective fusion temperatures of the first layer (3; 3') and second layer (6; 6') in the partial region (23, 23'; 23", 23") of the overlap region at the boundary surface (7; 7').

10. The multi-layer security document body (2; 2') of claim 9 wherein the first layer (3; 3') and/or the second layer (6; 6') are laminated with further layers to form a composite body by way of an input of heat introduced via a further overlap region of the layers in an essentially evenly distributed manner.

11. The multi-layer security document body (2; 2') of claim 9 or 10 wherein the connection which cannot be detached without being destroyed is configured by applying a pressing force acting perpendicularly to the boundary (7; 7') at the time of the local heating-up above fusion point of the first layer (3; 3') and second layer (6; 6') at the boundary surface (7; 7').

12. The multi-layer security document body (2; 2') of any one of claims 9 to 11 wherein the first layer (3; 3') projects out of the composite body at an edge (12; 12') of the multi-layer security document body (2; 2'), preferably along an entire length of the edge (12; 12').

13. The multi-layer security document body (2; 2') of claim 9 or 12 wherein between the first layer (3; 3') and the second layer (6; 6'), connections which cannot be detached without being destroyed are configured in a plurality of separate partial regions (23, 23'; 23", 23") of the overlap region at the boundary surface (7; 7').

14. The multi-layer security document body (2; 2') of any one of claims 9 to 13 wherein the first plastic material is a thermoplastic elastomer, preferably a thermoplastic polyurethane (TPU), and the other plastic material is a thermoplastic material that is stable at high temperature, preferably a polycarbonate (PC).

15. The multi-layer security document body (2; 2') of any one of claims 9 to 14 wherein at least one security feature is incorporated into at least one of the layers, and the at least one security feature overlaps the connection which cannot be detached without being destroyed in a projection perpendicular to the boundary surface (7; 7').

## Revendications

1. Procédé servant à assembler une première couche (3 ; 3') d'un premier matériau en plastique à une deuxième couche (6 ; 6') d'un autre matériau en plastique d'un corps de document de sécurité multicouche (2 ; 2'), lesquelles sont empilées à plat l'une sur l'autre de sorte que la première couche (3 ; 3') et la deuxième couche (6 ; 6') présentent, dans une zone de chevauchement plane, une face limite (7 ; 7'), sachant que le premier matériau en plastique et l'autre matériau en plastique présentent diverses températures de fusion et que les couches sont assemblées l'une à l'autre par un apport d'énergie,
sachant que
l'énergie est appliquée de manière ciblée dans une zone partielle (23, 23' ; 23", 23") de la zone de chevauchement plane au niveau de la face limite (7 ; 7') de sorte que la première couche (3 ; 3') et la deuxième couche (6 ; 6') sont chauffées respectivement uniquement localement dans la zone partielle (23, 23' ; 23", 23") ou de manière limitée aux alentours de la zone partielle (23, 23' ; 23", 23") de la zone de chevauchement, au niveau de la face limite (7 ; 7') au-dessus de la température de fusion respective et sont assemblées l'une à l'autre, et en ce qu'un assemblage ne pouvant pas être désolidarisé sans provoquer de destruction est réalisé dans la zone partielle (23, 23' ; 23", 23") ou aux alentours délimités de la zone partielle (23, 23' ; 23", 23").

2. Procédé selon la revendication 1, **caractérisé en ce qu'**une force de pression agissant de manière perpendiculaire par rapport à la face limite (7 ; 7') est appliquée.

3. Procédé selon la revendication 1 ou 2, **caractérisé en ce que** la première couche (3 ; 3') et/ou la deuxième couche (6 ; 6') ont été soumises à un laminage ou se trouvent dans un état laminé avec d'autres couches (8, 8') au moyen d'un apport de chaleur appliqué essentiellement de manière répartie avec homogénéité sur une autre zone de chevauchement des couches pour former un corps composite (11,11').

4. Procédé selon l'une quelconque des revendications 1 à 3, **caractérisé en ce que** l'apport d'énergie est effectué au niveau de la face limite (7 ; 7') au moyen d'un rayonnement électromagnétique.

5. Procédé selon l'une quelconque des revendications 1 à 4, **caractérisé en ce que** le rayonnement électromagnétique est modulé afin d'obtenir un apport d'énergie efficace dans la première couche (3 ; 3') et dans la deuxième couche (6 ; 6').

6. Procédé selon l'une quelconque des revendications 1 à 5, **caractérisé en ce que** de l'énergie est apportée de manière ciblée dans plusieurs zones partielles (23, 23' ; 23", 23") espacées les unes des autres de la zone de chevauchement au niveau de la face limite (7 ; 7') afin de réaliser dans lesdites zones partielles (23, 23' ; 23", 23") au niveau de la face limite (7 ; 7') des assemblages ne pouvant être désolidarisés sans provoquer de destruction.

7. Procédé selon l'une quelconque des revendications 1 à 6, **caractérisé en ce que** le premier matériau en plastique est un élastomère thermoplastique, de préférence un polyuréthane thermoplastique (TPU), et **en ce que** l'autre matériau en plastique est un matériau en plastique thermoplastique stable à haute température, de préférence un polycarbonate (PC).

8. Procédé selon l'une quelconque des revendications 1 à 7, **caractérisé en ce qu'**une micropuce (4 ; 4') et une antenne (5 ; 5') ont été incorporées ou sont incorporées dans la première couche (3 ; 3').

9. Corps de document de sécurité multicouche (2 ; 2') comprenant une première couche (3 ; 3') d'un premier matériau en plastique et une deuxième couche (6 ; 6') d'un autre matériau en plastique, qui sont empilées l'une sur l'autre à plat de sorte que la première couche (3 ; 3') et la deuxième couche (6 ; 6') présentent, dans une zone de chevauchement plane, une face limite (7 ; 7'), sachant que le premier matériau en plastique et l'autre matériau en plastique présentent des températures de fusion différentes et que les couches ont été assemblées par un apport d'énergie, sachant que la première couche (3 ; 3') et la deuxième couche (6 ; 6') présentent dans une zone partielle (23 ; 23' ; 23" ; 23") de la zone de chevauchement plane, au niveau de la face limite (7 ; 7'), localement un assemblage ne pouvant pas être désolidarisé sans provoquer de destruction, lequel est réalisé par un réchauffement local uniquement de la première couche (3 ; 3') et de la deuxième couche (6 ; 6') dans la zone partielle (23, 23' ; 23", 23") de la zone de chevauchement au niveau de la face limite (7 ; 7') au-dessus de la température de fusion respective.

10. Corps de document de sécurité multicouche (2 ; 2') selon la revendication 9, **caractérisé en ce que** la première couche (3 ; 3') et/ou la deuxième couche (6 ; 6') sont laminées avec d'autres couches au moyen d'un apport de chaleur réparti essentiellement de manière homogène sur une autre zone de chevauchement des couches pour former un corps composite.

11. Corps de document de sécurité multicouche (2 ; 2') selon la revendication 9 ou 10, **caractérisé en ce que** l'assemblage ne pouvant être désolidarisé sans provoquer de destruction est réalisé en exerçant une force de pression agissant de manière perpendiculaire par rapport à la face limite (7; 7') au moment du réchauffement local au-dessus du point de fusion de la première couche (3 ; 3') et de la deuxième couche (6 ; 6') au niveau de la face limite (7 ; 7').

12. Corps de document de sécurité multicouche (2 ; 2') selon l'une quelconque des revendications 9 à 11, **caractérisé en ce que** la première couche (3 ; 3') fait saillie d'un bord (12 ; 12') du corps de document de sécurité multicouche (2 ; 2') hors du corps composite, de préférence le long d'une longueur totale du bord (12 12').

13. Corps de document de sécurité multicouche (2 ; 2') selon la revendication 9 ou 12, **caractérisé en ce que** des assemblages ne pouvant être désolidarisés sans provoquer de destruction sont réalisés entre la première couche (3 ; 3') et la deuxième couche (6; 6') dans plusieurs zones partielles (23, 23'; 23", 23") de la zone de chevauchement au niveau de la face limite (7 ; 7').

14. Corps de document de sécurité multicouche (2 ; 2') selon l'une quelconque des revendications 9 à 13, **caractérisé en ce que** le premier matériau en plastique est un élastomère thermoplastique, de préférence un polyuréthane thermoplastique (TPU), et **en ce que** l'autre matériau plastique est un matériau en plastique thermoplastique stable à haute température, de préférence un polycarbonate (PC).

15. Corps de document de sécurité multicouche (2 ; 2') selon l'une quelconque des revendications 9 à 14, **caractérisé en ce qu'**au moins une caractéristique de sécurité est incorporée dans au moins une des couches, sachant que la caractéristique de sécurité au moins au nombre de une chevauche dans une projection de manière perpendiculaire à la face limite (7 ; 7') avec l'assemblage ne pouvant être désolidarisé sans provoquer de destruction.
